# EUROPEAN PATENT APPLICATION

(11) **EP 4 685 868 A1**
(43) Date of publication of application: **28.01.2026**
(21) Application number: 24775031.8
(22) Date of filing: 08.01.2024
(51) Int. Cl.: H01M 4/36, H01M 4/136, H01M 4/525, H01M 4/139, H01M 4/133, H01M 4/134, H01M 10/052, H01M 10/0562, C01B 17/22, H01M 4/02

(54) **POSITIVE ACTIVE MATERIAL FOR RECHARGEABLE LITHIUM BATTERIES, METHOD FOR PREPARING SAME, AND POSITIVE ELECTRODE FOR RECHARGEABLE LITHIUM BATTERIES, RECHARGEABLE LITHIUM BATTERY, AND ALL-SOLID-STATE RECHARGEABLE BATTERY, COMPRISING SAME**

(30) Priority: 23.03.2023 KR 20230038063
(71) Applicant: SAMSUNG SDI CO., LTD., Yongin-si, Gyeonggi-do 17084 (KR)
(72) Inventor: YUN, Pilsang, Yongin-si, Gyeonggi-do 17084 (KR); KAMATA, Yasutaka, Yongin-si, Gyeonggi-do 17084 (KR); PARK, Sangin, Yongin-si, Gyeonggi-do 17084 (KR); KIM, Do-Yu, Yongin-si, Gyeonggi-do 17084 (KR); BYEON, Pilgyu, Yongin-si, Gyeonggi-do 17084 (KR); LEE, Hanseul, Yongin-si, Gyeonggi-do 17084 (KR); KIM, Saehwan, Yongin-si, Gyeonggi-do 17084 (KR); KIM, Hyunbeom, Yongin-si, Gyeonggi-do 17084 (KR); YANG, Hwichul, Yongin-si, Gyeonggi-do 17084 (KR)
(74) Representative: Michalski Hüttermann & Partner Patentanwälte mbB
(86) International application number: PCT/KR2024/000333
(87) International publication number: WO 2024/195983

(57) **Abstract**

Disclosed are a positive electrode active material for a rechargeable lithium battery including particles containing a lithium transition metal composite oxide, and a coating layer located on the surface of the particles and containing ZrO₂ and Li₆Zr₂O₇, a preparation method thereof, and a positive electrode, rechargeable lithium battery, and an all-solid-state rechargeable battery.

## Description

### [Technical Field]

Positive electrode active materials for rechargeable lithium batteries, preparation methods thereof, and positive electrodes for rechargeable lithium batteries, rechargeable lithium batteries, and all-solid-state rechargeable batteries including the same are disclosed.

### [Background Art]

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive electrode active materials have been investigated to realize rechargeable lithium batteries for applications to the uses. Among them, lithium nickel-based oxide, lithium nickel manganese cobalt composite oxide, lithium nickel cobalt aluminum composite oxide, and lithium cobalt oxide are mainly used as positive electrode active materials. However, these positive electrode active materials have structure collapses or cracks during the repeated charges and discharges and thus problems of deteriorating a long-term cycle-life of a rechargeable lithium battery and increasing resistance and thus exhibiting no satisfactory capacity characteristics. Accordingly, development of a novel positive electrode active material securing long-term cycle-life characteristics as well as realizing high capacity and high energy density is required.

Meanwhile, recently, as a risk of explosion of a battery using a liquid electrolyte has been reported, development of an all-solid-state rechargeable battery has been actively conducted. However, a solid electrolyte, compared to the liquid electrolyte, has problems of low ionic conductivity, resistance on the interface with solid particles of a positive electrode active material and the like in a battery, deterioration of the ion conduction performance by formation of a depletion layer by solid-to-solid bonding, and the like. There is a need for development of positive electrode active materials that may be used with these solid electrolytes, and development of positive electrode active materials that may improve overall performance, including capacity characteristics and long cycle-life characteristics, of all-solid-state rechargeable batteries is also necessary.

### [Disclosure]

### [Technical Problem]

The structural stability of the positive electrode active material is improved and ionic conductivity is increased through a coating layer on the surface of the positive electrode active material, and mass production is realized by applying a dry coating method that does not use organic solvents. In batteries using solid electrolytes, a depletion layer problem between solid particles is resolved and the interfacial problem is resolved by suppressing the reaction between the positive electrode active material and the solid electrolyte. Capacity and cycle-life characteristics of rechargeable lithium batteries are improved.

### [Technical Solution]

In an embodiment, a positive electrode active material for a rechargeable lithium battery includes particles containing a lithium transition metal composite oxide, and a coating layer located on the surface of the particles and containing ZrO₂ and Li₆Zr₂O₇.

In an embodiment, a method for preparing a positive electrode active material for a rechargeable lithium battery includes dry mixing 100 parts by mole of particles containing a lithium transition metal composite oxide and 0.1 parts by mole to 0.6 parts by mole of a zirconium raw material and heat treating the mixture at 420 °C to 580 °C.

In an embodiment, a positive electrode for a rechargeable lithium battery including the positive electrode active material is provided.

In an embodiment, a rechargeable lithium battery including the positive electrode, a negative electrode, and an electrolyte is provided.

In an embodiment, an all-solid-state rechargeable battery includes the positive electrode and a negative electrode, and a solid electrolyte layer between the positive electrode and the negative electrode.

### [Advantageous Effects]

The positive electrode active material for the rechargeable lithium battery according to an embodiment includes a coating layer of a mixed phase of ZrO₂ and Li₆Zr₂O₇, thereby improving structural stability and increasing ionic conductivity, and, for example, effectively suppressing reaction with sulfide-based solid electrolyte particles, and thus improving capacity characteristics and cycle-life characteristics.

The method for preparing the positive electrode active material for a rechargeable lithium battery according to an embodiment applies a type of dry coating method, which is advantageous for mass production and enables the formation of a good coating layer of uniform thickness, thereby improving productivity and economic efficiency of the positive electrode active material as well as capacity characteristics and cycle-life characteristics.

The positive electrode for the rechargeable lithium battery according to an embodiment and a rechargeable lithium battery and an all-solid-state rechargeable battery including the same may implement excellent capacity characteristics and cycle-life characteristics.

### [Description of the Drawings]

FIGS. 1 and 2 are cross-sectional views schematically showing an all-solid-state rechargeable battery according to embodiments.
FIG. 3 is a graph showing the initial charge capacity (gray bar graph) and initial discharge capacity (black bar graph) of the battery cells of Examples 1 to 5 and Comparative Examples 1 to 8.
FIG. 4 is a graph showing the initial discharge capacity (black bar graph) and 100-cycle capacity retention rate (dotted line graph) of the battery cells of Examples 1 to 5 and Comparative Examples 1 to 8.
FIG. 5 is a graph showing the capacity retention rate, i.e., life characteristics, according to the number of cycles for Example 3 and Comparative Examples 3, 4, 6, and 7.
FIG. 6 is a scanning electron microscope (SEM) image of the surface of the large particles (left) and small particles (right) of the positive electrode active material of Example 3.
FIG. 7 is an SEM image of the surface of the large and small particles of Comparative Example 1.
FIG. 8 is an SEM image of the surface of the large and small particles of Comparative Example 3.
FIG. 9 is an SEM image of the surface of the large and small particles of Comparative Example 4.
FIG. 10 is an SEM image of the surface of the large and small particles of Comparative Example 5.
FIG. 11 is an SEM image of the surface of the large and small particles of Comparative Example 6.
FIG. 12 is an SEM-EDS (SEM - Energy Dispersive X-ray Spectroscopy) image of the surface of the large particles (left) and small particles (right) of the positive electrode active material of Example 3.
FIG. 13 is an SEM-EDS image of the large and small particles of Comparative Example 1.
FIG. 14 is an SEM-EDS image of the large and small particles of Comparative Example 3.
FIG. 15 is an SEM-EDS image of the large and small particles of Comparative Example 4.
FIG. 16 is an SEM-EDS image of the large and small particles of Comparative Example 5.
FIG. 17 is an SEM-EDS image of the large and small particles of Comparative Example 6.
FIG. 18 is an image showing the distribution of Zr and Ni by analyzing the cross-section of small particles among the positive electrode active materials of Example 4 using STEM-EDS (Scanning Transmission Electron Microscopy - EDS).
FIG. 19 is a HRTEM (High-Resolution Transmission Electron Microscopy) image of a cross-section of a small particle among the positive electrode active materials of Example 4.
FIG. 20 is the result of performing IFFT (Inverse Fast Fourier Transform) on the area indicated by the square box in FIG. 19.
FIG. 21 is an enlarged image of the ZrO₂ region (left) and an enlarged image of the Li₆Zr₂O₇ region (right) in FIG. 20.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution. As used herein, when a definition is not otherwise provided, the average particle diameter means a diameter (D50) of particles having a cumulative volume of 50 volume% in the particle size distribution that is obtained by measuring the size (diameter or long axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Positive Electrode Active Material

A positive electrode active material for a rechargeable lithium battery according to an embodiment includes particles containing a lithium transition metal composite oxide, and a coating layer located on the surface of the particles and containing ZrO₂ and Li₆Zr₂O₇.

Here, rechargeable lithium batteries are used as a concept including lithium ion batteries, semi-solid batteries, polymer batteries, and all-solid batteries that use non-aqueous electrolyte solutions. The positive electrode active material has the advantages of low reactivity with a solid electrolyte and low interfacial resistance between solid particles, and is therefore advantageous for application to all-solid-state batteries or semi-solid-state batteries. For example, the positive electrode active material may be a positive electrode active material for an all-solid-state rechargeable battery.

### Coating Layer

The coating layer of the positive electrode active material according to an embodiment includes a mixed phase of ZrO₂ and Li₆Zr₂O₇. The coating layer may include ZrO₂ with relatively high crystallinity and Li₆Zr₂O₇ with lower crystallinity. The presence or absence of ZrO₂ and Li₆Zr₂O₇ may be determined, for example, by inverse FFT analysis of HRTEM images. The coating layer including ZrO₂ and Li₆Zr₂O₇ may facilitate the movement of lithium ions on the surface of the positive electrode active material, improve structural stability of the positive electrode active material, and improve interfacial resistance by lowering the reactivity with the solid electrolyte.

Here, the coating layer may be expressed as a buffer layer or a protective layer.

The coating layer may further include amorphous regions. For example, the coating layer can be said to include a ZrO₂ crystal phase, a Li₆Zr₂O₇ crystal phase, and a Zr-containing amorphous region. Such a coating layer may improve lithium ionic conductivity and enhance cycle-life characteristics of the positive electrode active material while having a thin and uniform thickness.

The coating layer may be in a form of a continuous film or an island. The coating layer may be prepared by a dry coating method described later, and even then, the coating layer can be formed well with a uniform thickness on the surface of the positive electrode active material without being agglomerated or locally present. For example, the coating layer may exist in the form of a continuous and uniform film on the surface of a particle containing a lithium transition metal composite oxide. In this case, the capacity characteristics and cycle-life characteristics of the positive electrode active material may be further improved.

A thickness of the coating layer may be from 5 nm to 300 nm, for example from 5 nm to 200 nm, from 5 nm to 100 nm, from 5 nm to 80 nm, or from 10 nm to 50 nm. By having the above thickness range of the coating layer, the electrochemical characteristics of a rechargeable lithium battery can be improved by suppressing an increase in resistance due to the coating and effectively protecting the positive electrode active material while improving ionic conductivity.

According to an embodiment, the coating layer may be formed with a uniform thickness without being locally present or agglomerated on the surface of the positive electrode active material. For example, the standard deviation of the coating layer thickness may be less than or equal to 10%, or less than or equal to 5%, of the diameter of the positive electrode active material, and may be less than or equal to 100 nm, less than or equal to 50 nm, or less than or equal to 30 nm.

The content of Zr in the coating layer may be 0.1 parts by mole to 0.6 parts by mole, for example, 0.1 parts by mole to 0.5 parts by mole, or 0.1 parts by mole to 0.4 parts by mole based on to 100 parts by moles of particles containing a lithium transition metal composite oxide. Additionally, the content of Zr in the coating layer may be 0.1 wt% to 6 wt%, for example, 0.5 wt% to 6 wt%, or 1 wt% to 5.5 wt% based on 100 wt% of the positive electrode active material. The content of Zr of the coating layer may be 0.1 at% to 10 at%, for example 0.1 at% to 8 at%, 0.1 at% to 7 at%, 0.5 at% to 6.5 at%, or 1 at% to 6 at%. When the content of Zr satisfies the above range, the coating layer can sufficiently play a role in protecting the positive electrode active material without acting as a resistor, and may exist well with a uniform thickness without being agglomerated or locally present on the surface of the positive electrode active material, thereby effectively improving cycle-life characteristics without reducing the capacity of the positive electrode active material. If the content of Zr is excessive, the coating layer may become thicker and act as a resistive layer, which may reduce the charge/discharge capacity of the positive electrode active material. Conversely, if the content of Zr is too low, it may not be able to sufficiently perform its buffer function, which may result in a deterioration in cycle-life characteristics of the positive electrode active material.

### Lithium Transition Metal Composite Oxide Particles

. In the positive electrode active material according to an embodiment, the lithium transition metal composite oxide particle means a type of core having a particle shape containing a lithium transition metal composite oxide, and a positive electrode active material commonly used can be applied without limitation. The lithium transition metal composite oxide particles may be compounds capable of reversible intercalation and deintercalation of lithium, and may include a compound represented by any one of the following chemical formulas.

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤ 2);

LiₐNi₁-_{b-c}Co_{b}X_{c}O_{2-α}T_{α} (0.90 ≤ a ≤ 1.8, 0 ≤ b ≤ 0.5, 0 ≤ c ≤ 0.05, 0 < α <2);

LiₐNi_{1-b-c}CO_{b}X_{c}O_{2-α}T₂ (0.90 ≤ a ≤ 1.8, 0 ≤ b ≤ 0.5, 0 ≤ c ≤ 0.05, 0 < α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

LiₐFePO₄ (0.90 ≤ a ≤ 1.8).

In the above chemical formulas, A is selected from the group consisting of Ni, Co, Mn, and a combination thereof; X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The lithium transition metal composite oxide may include, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium nickel manganese oxide (NM), lithium manganese oxide (LMO), lithium iron phosphate oxide (LFP), or a combination thereof.

The lithium transition metal composite oxide may be, for example, a lithium nickel-based oxide represented by Chemical Formula 1, a lithium cobalt-based oxide represented by Chemical Formula 2, a lithium iron phosphate-based compound represented by Chemical Formula 3, or a cobalt-free lithium nickel-manganese-based oxide represented by Chemical Formula 4.

[Chemical Formula 1] Liₐ₁Niₓ₁M¹_{y1}M²_{z1}O_{2-b1}X_{b1}

In Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements selected from consisting of Al, B, Ba, Ca, Ce, Co, Cr, Cu, Fe, Mg, Mn, Mo, Nb, Si, Sn, Sr, Ti, V, W, Zn, and Zr, and X is one or more elements selected from consisting of F, P, and S,

[Chemical Formula 2] Liₐ₂Coₓ2M³_{y2}O_{2-b2}X_{b2}

wherein, in Chemical Formula 2, 0.9≤a2≤1.8, 0.7≤x2≤1, 0≤y2≤0.3, 0.9≤x2+y2≤1.1, and 0≤b2≤0.1, M³ is one or more elements selected from consisting of Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from consisting of F, P, and S,

[Chemical Formula 3] Liₐ₃Fex₃M⁴_{y3}PO_{4-b3}X_{b3}

wherein, in Chemical Formula 3, 0.9≤a3≤ 1.8, 0.6≤x3≤ 1, 0≤ y3≤0.4, and 0≤b3≤0.1, M⁴ is one or more elements selected from consisting of Al, B, Ba, Ca, Ce, Co, Cr, Cu, Mg, Mn, Mo, Ni, Se, Si, Sn, Sr, Ti, V, W, Y, Zn, and Zr, and X is one or more elements selected from consisting of F, P, and S, and

[Chemical Formula 4] Liₐ₄Niₓ₄Mn_{y4}M⁵_{z4}O_{2-b4}X_{b4}

wherein, in Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1, M⁵ is one or more elements selected from consisting of Al, B, Ba, Ca, Ce, Cr, Fe, Mg, Mo, Nb, Si, Sn, Sr, Ti, V, W, and Zr, and X is one or more elements selected from consisting of F, P, and S.

For example, the lithium transition metal composite oxide may be a lithium nickel-based oxide represented by Chemical Formula 1, for example, a high nickel-based oxide. That is, a content of nickel relative to 100 mol% of metals excluding lithium in the lithium transition metal composite oxide may be greater than or equal to 80 mol%, or greater than or equal to 90 mol%, greater than or equal to 91 mol%, or greater than or equal to 94 mol%. In Chemical Formula 1, 0.8≤x1≤1, 0≤y1≤0.2, and 0≤z1≤0.2, or 0.9≤x1≤1, 0≤y1≤0.1, and 0≤z1≤0.1, or 0.91≤x1≤1, 0≤y1≤0.09, and 0≤z1≤0.09, or 0.94≤x1≤1, 0≤y1≤0.06, and 0≤z1≤0.06 may be satisfied. For example, 0.8≤x1<1, 0<y1≤0.2, and 0≤z1≤0.2 or 0.9≤x1<1, 0<y1≤0.1, and 0≤z1 ≤0.1. The high nickel-based oxide may achieve high capacity, making it suitable for use in high-capacity, high-density rechargeable lithium batteries, which are in high demand these days. However, because the positive electrode active material containing the high nickel-based oxide has a large volume change of about 8% during charge and discharge, it is difficult to maintain long-term contact with the solid electrolyte. However, by introducing a coating layer according to an embodiment, it is possible to implement long-term adhesion between solid particles while facilitating the movement of lithium ions.

The average particle diameter (D50) of the particles containing the lithium transition metal composite oxide may be from 1 µm to 25 µm, for example from 2 µm to 20 µm, or from 3 µm to 18 µm. Here, the average particle diameter means a diameter (D50) of particles having a cumulative volume of 50 volume% in the particle size distribution that is obtained by measuring the size (diameter or long axis length) of about 20 particles at random in a scanning electron microscope image.

The particles containing the lithium transition metal composite oxide may be in a form of secondary particles in which a plurality of primary particles are agglomerated, in the form of single particles, or in the form of a mixture thereof. The secondary particles may be a type of polycrystal. The single particles may exist alone without a grain boundary within the particle, is composed of one particle, and may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal.

For example, the particles containing the lithium transition metal composite oxide may include large particles having an average particle diameter of 9 µm to 25 µm and small particles having an average particle diameter of 1 µm to 8 µm. In this case, the large particles may be included in an amount of 60 to 95 wt% and the small particles may be included in an amount of 5 to 40 wt%, for example, the large particles may be included in an amount of 70 to 90 wt% and the small particles may be included in an amount of 10 to 30 wt% based on the total of 100 wt% of the large particles and the small particles. A high-energy density battery may be realized by mixing the large and small particles.

The large particles may be in a form of a secondary particle composed of a plurality of primary particles, and the small particles may be in a form of a secondary particle composed of a plurality of primary particles or a form of single particles.

An average particle size of the large particles may be 9 µm to 20 µm, or 10 µm to 15 µm. An average particle size of the small particles may be 1 µm to 7 µm, 1 µm to 6 µm, or 2 µm to 5 µm. Here, the average particle diameter may be obtained by randomly measuring the size (diameter or long axis length) of about 20 particles in an electron microscope photograph such as a scanning electron microscope, and then taking the diameter (D50) of the particles having a cumulative volume of 50 volume% in the particle size distribution as the average particle size.

### Method for Preparing Positive Electrode Active Material

In an embodiment, provided is a method for preparing a positive electrode active material which includes dry mixing 100 parts by mole of particles containing a lithium transition metal composite oxide and 0.1 parts by mole to 0.6 parts by mole of a zirconium raw material and heat treating the mixture at 420 °C to 580 °C. It is possible to prepare the aforementioned positive electrode active material by the method. The method is a type of dry coating method, which does not use organic solvents or expensive coating raw materials and may use existing equipment, making it economical and environmentally friendly, and making mass production feasible. According to the above method, a positive electrode active material having a coating layer containing ZrO₂ and Li₆Zr₂O₇ may be synthesized, and a coating layer having an appropriate amount and thickness may be synthesized in a good form, thereby manufacturing a positive electrode active material having improved capacity characteristics and cycle-life characteristics. The positive electrode active material has low reactivity with sulfide-based solid electrolyte particles and low interfacial resistance, and thus it may be applied to all-solid-state rechargeable batteries, etc., to improve capacity characteristics, rate capability, cycle-life characteristics.

Because the lithium transition metal composite oxide has been described above, a detailed description thereof will be omitted.

The zirconium raw material is a compound including the element zirconium, and may be applied without limitation as long as it is a compound that can be mixed in a dry manner. The zirconium raw material may be, for example, zirconium-containing oxide, zirconium-containing sulfide, zirconium-containing carbonate, zirconium-containing hydroxide, etc., and may be, for example, zirconium oxide, zirconium sulfide, zirconium carbonate, zirconium hydroxide, or a combination thereof.

The zirconium raw material is mixed in an amount of 0.1 to 0.6 parts by mole, for example, 0.1 to 0.5 parts by mole, or 0.1 to 0.4 parts by mole based on 100 parts by mole of the particles containing the lithium transition metal composite oxide. If the zirconium raw material is added in the above range, a coating layer of appropriate amount and thickness may be formed, which may sufficiently protect the positive electrode active material, and may exist with a uniform thickness without agglomerating or existing locally on the surface of the positive electrode active material. If the amount of the zirconium raw material exceeds 0.6 parts by mole, the coating layer may become thicker and act as a resistive layer, thereby reducing the charge/discharge capacity of the positive electrode active material. Conversely, if the amount of the zirconium raw material is less than 0.1 parts by mole, it may not sufficiently perform its buffer function, which may result in a deterioration in the cycle-life characteristics of the positive electrode active material.

For example, the zirconium raw material may be in the form of nanoparticles. The zirconium raw material is in the form of particles, and the average particle diameter (D50) may be, for example, 10 nm to 500 nm, 10 nm to 500 nm, or 50 nm to 500 nm. For example, the zirconium raw material may be particles including zirconium oxide, and the average particle diameter (D50) of the particles may be 10 nm to 500 nm. In this case, it may be advantageous to synthesize a coating layer of appropriate thickness.

In the method for preparing a positive electrode active material according to an embodiment, dry mixing means mixing without a solvent and can be understood as a solid-phase coating method. This is distinct from wet coating or liquid coating.

In a method for preparing a positive electrode active material according to an embodiment, a coating layer containing a mixed phase of ZrO₂ and Li₆Zr₂O₇ and having a uniform thickness may be formed by heat-treating at 420 °C to 580 °C after dry mixing. The heat treatment temperature may be, for example, 430 °C to 570 °C, 440 °C to 560 °C, 450 °C to 550 °C, or 460 °C to 530 °C. By heat treatment in the above temperature range, it is possible to synthesize a coating layer having an appropriate crystalline phase, and the coating layer does not act as a resistance but sufficiently acts as a buffer, thereby improving the capacity characteristics and cycle-life characteristics of the positive electrode active material. For example, if the heat treatment temperature is less than 420 °C, the coating layer may not form an appropriate crystalline phase and only act as a resistance, which may deteriorate the capacity characteristics of the positive electrode active material. If the heat treatment temperature exceeds 580 °C, the coating materials may be agglomerated or be coated only locally, reducing the effectiveness of the buffer. Additionally, zirconium may be absorbed into the positive electrode active material, failing to act as a buffer, and capacity and cycle-life characteristics may deteriorate.

The heat treatment may be performed in an oxygen atmosphere, for example, for 5 hours to 25 hours, or for 10 hours to 20 hours. Under these conditions, a good coating layer may be formed.

In an embodiment, when dry mixing the particles containing the lithium transition metal composite oxide and the zirconium raw material, a lithium raw material may be mixed together. The lithium raw material is a compound containing lithium and may be applied without limitation as long as it can be mixed in a dry manner. The lithium raw material may be, for example, Li₂CO₃, LiOH, hydrates thereof, or a combination thereof. The lithium raw material may be mixed in an amount of more than 1 part by mole and less than or equal to 4 parts by mole, for example, more than 1 part by mole and less than or equal to 3 parts by mole, or more than 2 part by mole and less than or equal to 4 parts by mole based on 1 part by mole of the zirconium raw material. When lithium raw materials are mixed together and heat treated, it is advantageous to form a lithium zirconium oxide, for example, Li₆Zr₂O₇ crystalline phase in the coating layer, increase lithium ionic conductivity, and obtain a coating layer of appropriate thickness in good form.

### Positive Electrode

In an embodiment, provided is a positive electrode for a rechargeable lithium battery which includes the aforementioned positive electrode active material or the positive electrode active material prepared according to the aforementioned method. The positive electrode for the rechargeable lithium battery may include a current collector and a positive electrode active material layer on the current collector. The positive electrode active material layer includes the above-described positive electrode active material and may further include a binder and/or a conductive material.

The binder improves binding properties of positive electrode active material particles with one another and with a current collectorexamples thereof. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

An amount of the binder in the positive electrode active material layer may be approximately 1 wt% to 5 wt% based on a total weight of the positive electrode active material layer.

The conductive material is used to impart conductivity to the electrode, and any material that does not cause chemical change and conducts electrons can be used in the battery. Examples thereof may include a carbon-based material such as natural graphite, artificial graphite, carbon black, acetylene black, Ketjen black, a carbon fiber, a carbon nanofiber, a carbon nanotube, and the like; a metal-based material including copper, nickel, aluminum, silver, etc. in a form of a metal powder or a metal fiber; a conductive polymer such as a polyphenylene derivative; or a mixture thereof.

An amount of the conductive material in the positive electrode active material layer may be 1 wt% to 5 wt% based on a total weight of the positive electrode active material layer.

The positive electrode current collector may be an aluminum foil, but is not limited thereto.

Meanwhile, the positive electrode according to an embodiment may be, for example, a positive electrode for an all-solid-state rechargeable battery. The aforementioned positive electrode active material has a coating layer on its surface that acts as a buffer, thereby reducing the reactivity with a solid electrolyte, particularly a sulfide-based solid electrolyte, and solving problems occurring at the interface of solid particles, and improving the capacity characteristics and cycle-life characteristics of an all-solid-state rechargeable battery.

The positive electrode for an all-solid-state rechargeable battery includes the aforementioned positive electrode active material, optionally a binder, a conductive material, etc., and may further include a solid electrolyte.

### Solid Electrolyte

The solid electrolyte may be an inorganic solid electrolyte such as a sulfide-based solid electrolyte or an oxide-based solid electrolyte.

In an embodiment, the solid electrolyte may be a sulfide-based solid electrolyte having excellent ionic conductivity. The sulfide-based solid electrolyte particles may include, for example Li₂S-P₂S₅, Li₂S-P₂S₅-LiX (wherein X is a halogen element, for example I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n is each an integer and Z is Ge, Zn or Ga), Li₂S-GeS₂, Li₂S-SiS₂-Li₃PO₄, Li₂S-SiS₂-LiₚMO_{q} (wherein p and q each an integer and M is P, Si, Ge, B, Al, Ga, or In), or a combination thereof.

Such a sulfide-based solid electrolyte may be obtained by, for example, mixing Li₂S and P₂S₅ in a molar ratio of 50:50 to 90:10 or 50:50 to 80:20 and optionally performing heat treatment. Within the above mixing ratio range, a sulfide-based solid electrolyte having excellent ionic conductivity may be prepared. The ionic conductivity may be further improved by adding SiS₂, GeS₂, B₂S₃, and the like as other components thereto.

Mechanical milling or a solution method may be applied as a mixing method of sulfur-containing raw materials for preparing a sulfide-based solid electrolyte. The mechanical milling is a method of mixing starting materials by placing them in a ball mill reactor and vigorously stirring them to finely particle the starting materials. The solution method may be performed by mixing the starting materials in a solvent to obtain a solid electrolyte as a precipitate. In addition, in the case of heat treatment after mixing, crystals of the solid electrolyte may be more robust and ionic conductivity may be improved. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte particles according to an embodiment, for example, may be prepared through a first heat treatment of mixing sulfur-containing raw materials and firing at 120 °C to 350 °C and a second heat treatment of mixing the resultant of the first heat treatment and firing the same at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Small raw materials may be milled through the first heat treatment, and a final solid electrolyte can be synthesized through the second heat treatment. Through such two or more heat treatments, a sulfide-based solid electrolyte having high ionic conductivity and high performance can be obtained, and such a solid electrolyte may be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600 °C.

For example, the sulfide-based solid electrolyte particles may include argyrodite-type sulfide. The argyrodite-type sulfide-based solid electrolyte particles may have high ionic conductivity close to the range of 10⁻⁴ to 10⁻² S/cm, which is the ionic conductivity of general liquid electrolytes at room temperature, and may form an intimate bond between the positive electrode active material and the solid electrolyte without causing a decrease in ionic conductivity, and furthermore, an intimate interface between the electrode layer and the solid electrolyte layer. An all-solid-state rechargeable battery including the same may have improved battery performance such as rate capability, coulombic efficiency, and cycle-life characteristics.

The argyrodite-type sulfide-based solid electrolyte particles may include, for example, a compound represented by Chemical Formula 11.

[Chemical Formula 11] (LiₐM¹_{b}M²_{c})(P_{d}M³ₑ)(S_{f}M⁴_{g})Xₕ

In Chemical Formula 11, 4≤a≤8, M¹ is Mg, Cu, Ag, or a combination thereof, 0≤b<0.5, M² is Na, K, or a combination thereof, 0≤c<0.5, M³ is Sn, Zn, Si, Sb, Ge, or a combination thereof, 0<d<4, 0≤e<1, M⁴ is O, SOₙ, or a combination thereof, 1.5≤n≤5, 3≤f≤12, 0≤g<2, X is F, Cl, Br, I, or a combination thereof, and 0≤h≤2.

For example, the halide element (X) may be necessarily included in Chemical Formula 11, and in this case, it may be expressed as 0<h≤2. For example, M¹ element may be necessarily included in Chemical Formula 11, and in this case, it may be expressed as 0<b<0.5. In Chemical Formula 11, M³ may be understood as an element substituted for P and may be 0<e<1. In Chemical Formula 11, M⁴ is substituted for S, for example may be 0<g<2, and f, a ratio of S, may be for example 3≤f≤7. If M⁴ is SOₙ, SOₙ may be for example S₄O₆, S₃O₆, S₂O₃, S₂O₄, S₂O₅, S₂O₆, S₂O₇, S₂O₃, SO₄, SO₅, and the like, and may be for example, SO₄.

For example, in Chemical Formula 11, a+b+c+h=7, d+e=1, and f+g+h=6.

As an example, the argyrodite-type sulfide-based solid electrolyte particles may include Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li_{5.75}PS_{4.75}Cl_{1.25}, (Li_{5.69}Cu_{6.66})PS_{4.75}Cl_{1.25}, (Li_{5.72}Cu_{6.93})PS_{4.75}Cl_{1.25}, (Li_{5.69}Cu_{9.96})P(S_{4.76}(SO₄)_{6.65})Cl_{1.25}, (Li_{5.69}Cu_{6.66})P(S_{4.66}(SO₄)_{9.15})Cl_{1.25}, (Li_{5.72}Cu_{9.93})P(S_{4.725}(SO₄)_{6.625})Cl_{1.25}, (Li_{5.72}Na_{6.63})P(S_{4.725}(SO₄)_{6.625})Cl_{1.25}, Li_{5.75}P(S_{4.725}(SO₄)_{0.025})Cl_{1.25}, or a combination thereof, but are not limited thereto.

The argyrodite-type sulfide-based solid electrolyte may be prepared, for example, by mixing lithium sulfide and phosphorus sulfide, and optionally lithium halide. Heat treatment may be performed after mixing them. The heat treatment may include, for example, two or more heat treatment steps. The method of preparing the argyrodite-type sulfide-based solid electrolyte may include, for example, a first heat treatment in which raw materials are mixed and fired at 120 °C to 350 °C, and a second heat treatment in which the resultant of the first heat treatment is mixed again and fired at 350 °C to 800 °C.

An average particle diameter (D50) of the sulfide-based solid electrolyte particles may be, for example, 0.1 µm to 5.0 µm or 0.1 µm to 3.0 µm, and may be small particles of 0.1 µm to 1.9 µm or large particles of 2.0 µm to 5.0 µm. The sulfide-based solid electrolyte particles may be a mixture of small particles having an average particle size of 0.1 µm to 1.9 µm and large particles having an average particle size of 2.0 µm to 5.0 µm. The average particle diameter of the sulfide-based solid electrolyte particles may be measured using an electron microscope image, and for example, a particle size distribution may be obtained by measuring the size (diameter or long axis length) of about 20 particles in a scanning electron microscope image, and D50 may be calculated therefrom.

The solid electrolyte may include an oxide-based inorganic solid electrolyte in addition to a sulfide-based material. The oxide-based inorganic solid electrolyte may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃(PLZT) (0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics Li₃₊ₓLa₃M₂O₁₂ (M = Te, Nb, or Zr; x is an integer of 1 to 10), or a mixture thereof.

The solid electrolyte may be in a form of particles, and the average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm. Such a solid electrolyte can effectively penetrate between positive electrode active materials, and has excellent contact with the positive electrode active material and connectivity between solid electrolyte particles.

Based on 100 wt% of the positive electrode active material layer, the solid electrolyte may be included in an amount of 0.1 wt% to 35 wt%, for example, 1 wt% to 35 wt%, 5 wt% to 30 wt%, 8 wt% to 25 wt%, or 10 wt% to 20 wt%.

Additionally, in the positive electrode active material layer, 65 to 99 wt% of the positive electrode active material and 1 to 35 wt% of the solid electrolyte may be included, for example, 80 to 90 wt% of the positive electrode active material and 10 to 20 wt% of the solid electrolyte may be included based on the total sum of 100 wt% of the positive electrode active material and the solid electrolyte. If the solid electrolyte is included in the positive electrode at this amount, the efficiency and cycle-life characteristics of the all-solid-state battery can be improved without reducing the capacity.

### Rechargeable Lithium Battery

In an embodiment, a rechargeable lithium battery includes the aforementioned positive electrode including a positive electrode active material, a negative electrode, and an electrolyte. Herein, the rechargeable lithium battery may be understood as a general concept, such as a lithium ion battery using a non-aqueous electrolyte solution, a lithium metal battery using lithium metal as the negative electrode, and an all-solid-state rechargeable battery with a solid electrolyte layer between the positive and negative electrodes.

### Lithium Ion Battery

In an embodiment, a lithium ion battery using a non-aqueous electrolyte solution as an electrolyte is described while applying the aforementioned positive electrode active material.

A rechargeable lithium battery according to an embodiment may include a battery cell including a positive electrode, a negative electrode facing the positive electrode, a separator between the positive electrode and the negative electrode, and an electrolyte impregnating the positive electrode, the negative electrode, and the separator, a battery container containing the battery cell, and a sealing member sealing the battery container.

### Negative Electrode

A negative electrode for a rechargeable lithium battery includes a current collector and a negative electrode active material layer on the current collector. The negative electrode active material layer may include a negative electrode active material, and may further include a binder and/or a conductive material.

The negative electrode active material includes a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

As an example, the negative electrode active material may include silicon-carbon composite particles. An average particle diameter (D50) of the silicon-carbon composite particles may be, for example, 0.5 µm to 20 µm. Based on 100 wt% of the silicon-carbon composite particles, silicon may be included at 10 wt% to 60 wt% and carbon may be included at 40 wt% to 90 wt%. For example, the silicon-carbon composite particle may include a core including silicon particles, and a carbon coating layer located on the surface of the core. The average particle diameter (D50) of the silicon particles in the core may be 10 nm to 1 µm, or 10 nm to 200 nm. The silicon particles may exist as silicon alone, in the form of a silicon alloy, or in an oxidized form. The oxidized form of silicon may be expressed by SiOₓ (0<x<2). Additionally, a thickness of the carbon coating layer may be about 5 nm to 100 nm.

As an example, the silicon-carbon composite particle may include a core including silicon particles and crystalline carbon, and a carbon coating layer located on the surface of the core and including amorphous carbon. For example, in the silicon-carbon composite particle, amorphous carbon may not exist in the core but only in the carbon coating layer. The crystalline carbon may be artificial graphite, natural graphite, or a combination thereof, and the amorphous carbon may be formed from coal-based pitch, mesophase pitch, petroleum-based pitch, coal-based oil, heavy petroleum oil, or a polymer resin (phenolic resin, furan resin, polyimide). At this time, an amount of the crystalline carbon may be 10 wt% to 70 wt%, and an amount of the amorphous carbon may be 20 wt% to 40 wt% based on 100 wt% of the silicon-carbon composite particles.

In the silicon-carbon composite particle, the core may include pores in the center. The radius of the pores may be 30% to 50% of the radius of the silicon-carbon composite particle.

The silicon-carbon composite particles effectively suppress problems such as volume expansion, structural collapse, or particle crushing due to charging and discharging, prevent disconnection of conductive paths, achieve high capacity and high efficiency and is advantageous for use in high voltage or fast charging conditions.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of 1:99 to 90:10.

An amount of the negative electrode active material based on 100 wt% of the negative electrode active material layer may be 95 wt% to 99 wt%.

In an embodiment, the negative electrode active material layer further includes a binder, and may optionally further include a conductive material. An amount of the binder in the negative electrode active material layer may be 1 wt% to 5 wt% based on 100 wt% of the negative electrode active material layer. In addition, when the conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

The water-insoluble binder may include, for example polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included as a type of a thickener. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of the thickener used may be 0.1 parts by weight to 3 parts by weight based on 100 parts by weight of the negative electrode active material.

The conductive material is included to provide electrode conductivity and any electrically conductive material may be used as a conductive material unless it causes a chemical change and examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in combination of one or more, and when one or more are used in combination, the mixing ratio may be appropriately adjusted depending on the desired battery performance, which is widely understood by those skilled in the relevant field.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte solution may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

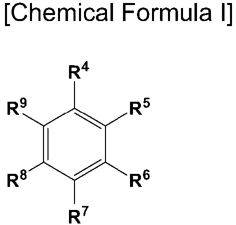

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte solution may further include vinylene carbonate or an ethylene carbonate-based compound represented by Chemical Formula II in order to improve cycle-life of a battery.

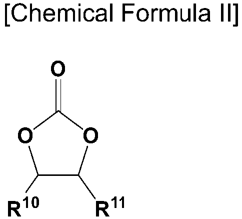

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-organic solvent supplies lithium ions in a battery, enables a basic operation of a rechargeable lithium battery, and improves transportation of the lithium ions between positive and negative electrodes.

The lithium salt may be applied without limitation on type, and may include, for example, LiPF₆, LiBF₄, LiSbF₆, LiAsF₆, LiClO₄, LiAlO₂, LiAlCl₄, LiPO₂F₂, LiCl, Lil, LiSCN, LiN(CN)₂, lithium bis(oxalato)borate (LiBOB), lithium difluoro(oxalato)borate (LiDFOB), lithium difluorobis(oxalato)phosphate (LiDFBP), lithium bis(trifluoromethanesulfonyl)imide (LiTFSI), lithium bis(fluorosulfonyl)imide (LiFSI), lithium bis(pentafluoroethanesulfonyl)imide (LiBETI), lithium trifluoromethanesulfonate, lithium tetrafluoroethanesulfonate, or a combination thereof.

The lithium salt may be used in a concentration ranging from 0.1 M to 2.0 M. If the lithium salt is included at the above concentration range, an electrolyte may have excellent performance and lithium ion mobility due to optimal electrolyte conductivity and viscosity.

### Separator

The separator separates a positive electrode and a negative electrode and provides a transporting passage for lithium ions and may be any generally-used separator in a lithium ion battery. In other words, the separator may have low resistance to ion transport and excellent impregnation for an electrolyte solution. For example, the separator may include a glass fiber, polyester, polyethylene, polypropylene, polytetrafluoroethylene, or a combination thereof and may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

### All-solid-state Rechargeable Battery

In an embodiment, provided an all-solid-state rechargeable battery including the aforementioned positive electrode and a negative electrode, and a solid electrolyte layer between the positive electrode and negative electrode.

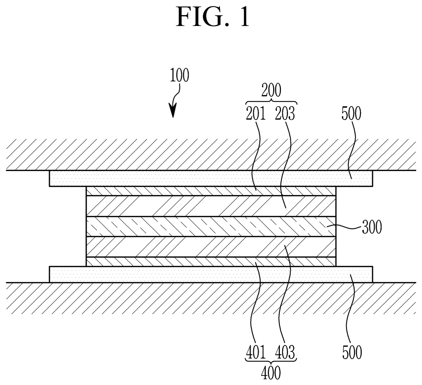

FIG. 1 is a cross-sectional view of an all-solid-state rechargeable battery according to an embodiment. Referring to FIG. 1, the all-solid-state rechargeable battery 100 may have a structure that an electrode assembly, in which a negative electrode 400 including a negative current collector 401 and a negative electrode active material layer 403, a solid electrolyte layer 300, and a positive electrode 200 including a positive electrode active material layer 203 and a positive current collector 201 are stacked, is housed in a battery case. The all-solid-state rechargeable battery 100 may further include at least one elastic layer 500 on the outside of at least either one of the positive electrode 200 and the negative electrode 400. FIG. 1 shows one electrode assembly including the negative electrode 400, the solid electrolyte layer 300, and the positive electrode 200, but two or more electrode assemblies may be stacked to manufacture an all-solid-state rechargeable battery.

### Negative Electrode

For example, the negative electrode for an all-solid-state rechargeable battery may be the same negative electrode as described for a lithium ion battery.

Or, as another example, the negative electrode for an all-solid-state rechargeable battery may be a precipitation-type negative electrode, unlike the aforementioned negative electrode. The precipitation-type negative electrode does not include a negative electrode active material during battery assembly, but may refer to a negative electrode in which lithium metal, etc. is precipitated or electrodeposited on the negative electrode during battery charging, thereby serving as a negative electrode active material.

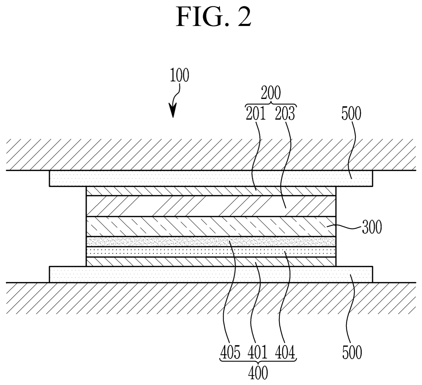

FIG. 2 is a schematic cross-sectional view of an all-solid-state rechargeable battery including a precipitation-type negative electrode. Referring to FIG. 2, the precipitation-type negative electrode 400' may include a current collector 401 and a negative electrode coating layer 405 on the current collector. In an all-solid-state rechargeable battery having such a precipitation-type negative electrode 400', initial charging begins in the absence of negative electrode active material, and during charging, high-density lithium metal is precipitated or electrodeposited between the current collector 401 and the negative electrode coating layer 405 or on the negative electrode coating layer 405 to form a lithium metal layer 404, which can serve as a negative electrode active material. Accordingly, in an all-solid-state rechargeable battery that has been charged at least once, the precipitation-type negative electrode 400' may include, for example, a current collector 401, a lithium metal layer 404 on the current collector, and a negative electrode coating layer 405 on the metal layer. The lithium metal layer 404 may be referred to as a layer in which lithium metal, etc. is precipitated during the charging process of the battery, and may be referred to as a metal layer, lithium layer, lithium electrodeposition layer, or negative electrode active material layer.

The negative electrode coating layer 405 may be referred to as a lithium electrodeposition inducing layer or a negative electrode catalyst layer, and may include a metal, a carbon material, or a combination thereof that acts as a catalyst.

The metal may be a lithiophilic metal, and may include, for example, gold, platinum, palladium, silicon, silver, aluminum, bismuth, tin, zinc, or a combination thereof, and may be composed of one of these or various types of alloys. When the metal is present in particle form, an average particle diameter (D50) thereof may be less than or equal to about 4 µm, for example, 10 nm to 4 µm.

The carbon material may be, for example, crystalline carbon, amorphous carbon, or a combination thereof. The crystalline carbon may be for example natural graphite, artificial graphite, mesophase carbon microbeads, or a combination thereof. The amorphous carbon may be for example carbon black, activated carbon, acetylene black, denka black, Ketjen black, or a combination thereof.

When the negative electrode coating layer 405 includes the metal and the carbon material, the metal and the carbon material may be, for example, mixed in a weight ratio of 1:10 to 2:1. Here, the precipitation of the lithium metal may be effectively promoted and improve characteristics of the all-solid-state rechargeable battery. The negative electrode coating layer 405 may include, for example, a carbon material on which a catalyst metal is supported or a mixture of metal particles and carbon material particles.

The negative electrode coating layer 405 may include, for example, the metal and amorphous carbon, and in this case, the deposition of lithium metal may be effectively promoted.

The negative electrode coating layer 405 may further include a binder, and the binder may be a conductive binder. In addition, the negative electrode coating layer 405 may further include general additives such as a filler, a dispersant, and an ion conducting agent.

The negative electrode coating layer 405 may have a thickness of, for example, 100 nm to 20 µm, 500 nm to 10 µm, or 1 µm to 5 µm.

The precipitation-type negative electrode 400' may further include a thin film, for example, on the surface of the current collector, that is, between the current collector and the negative electrode coating layer. The thin film may include an element capable of forming an alloy with lithium. The element capable of forming an alloy with lithium may be, for example, gold, silver, zinc, tin, indium, silicon, aluminum, bismuth, and the like, which may be used alone or an alloy of more than one. The thin film may further planarize a precipitation shape of the lithium metal layer 404 and much improve characteristics of the all-solid-state rechargeable battery. The thin film may be formed, for example, in a vacuum deposition method, a sputtering method, a plating method, and the like. The thin film may have, for example, a thickness of 1 nm to 500 nm.

The lithium metal layer 404 may include a lithium metal or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy.

A thickness of the lithium metal layer 404 may be 1 µm to 500 µm, 1 µm to 200 µm, 1 µm to 100 µm, or 1 µm to 50 µm. If the thickness of the lithium metal layer 404 is too thin, it is difficult to perform the role of a lithium storage, and if it is too thick, the battery volume may increase and performance may deteriorate.

When applying such a precipitation-type negative electrode, the negative electrode coating layer 405 may serve to protect the lithium metal layer 404 and suppress the precipitation growth of lithium dendrite. Accordingly, short circuit and capacity degradation of the all-solid-state battery may be suppressed and cycle-life characteristics can be improved.

### Solid Electrolyte Layer

The solid electrolyte layer 300 may include a sulfide-based solid electrolyte, an oxide-based solid electrolyte, and the like. Details on the sulfide-based solid electrolyte and oxide-based solid electrolyte are the same as described above and therefore a detailed description will be omitted.

Meanwhile, an average particle diameter (D50) of the solid electrolyte included in the solid electrolyte layer 300 may be larger than an average particle diameter (D50) of the solid electrolyte included in the positive electrode 200. In this case, overall performance can be improved by maximizing the energy density of the all-solid-state rechargeable battery and increasing the mobility of lithium ions. For example, the average particle diameter (D50) of the solid electrolyte included in the positive electrode 200 may be 0.1 µm to 1.9 µm, or 0.1 µm to 1.0 µm, and the average particle diameter (D50) of the solid electrolyte included in the solid electrolyte layer 300 may be 2.0 µm to 5.0 µm, or 2.0 µm to 4.0 µm, or 2.5 µm to 3.5 µm. When the particle size ranges are satisfied, the energy density of the all-solid-state rechargeable battery is maximized while the transfer of lithium ions is facilitated, so that resistance is suppressed, and thus the overall performance of the all-solid-state rechargeable battery can be improved. Here, the average particle diameter (D50) of the solid electrolyte may be measured through a particle size analyzer using a laser diffraction method.

The solid electrolyte layer 300 may further include a binder in addition to the solid electrolyte. Here, the binder may include a styrene butadiene rubber, polytetrafluoroethylene, polyvinylidene fluoride, polyethylene, an acrylate-based polymer, or a combination thereof, but is not limited thereto. The acrylate-based polymer may be, for example, butyl acrylate, polyacrylate, polymethacrylate, or a combination thereof.

The solid electrolyte layer 300 may be formed by adding a solid electrolyte to a binder solution, coating it on a base film, and drying the resultant. The solvent of the binder solution may be isobutyryl isobutyrate, xylene, toluene, benzene, hexane, or a combination thereof. Because a forming process of the solid electrolyte layer is well known in the art, a detailed description thereof will be omitted.

A thickness of the solid electrolyte layer 300 may be, for example, 10 µm to 150 µm.

The solid electrolyte layer 300 may further include an alkali metal salt and/or an ionic liquid and/or a conductive polymer.

The alkali metal salt may be, for example, a lithium salt. An amount of the lithium salt in the solid electrolyte layer may be greater than or equal to 1 M, for example, 1 M to 4 M. In this case, the lithium salt may improve ionic conductivity by improving lithium ion mobility of the solid electrolyte layer.

The lithium salt may be applied without limitation on type, and may include, for example, LiPF₆, LiBF₄, LiSbF₆, LiAsF₆, LiClO₄, LiAlO₂, LiAlCl₄, LiPO₂F₂, LiCl, Lil, LiSCN, LiN(CN)₂, lithium bis(oxalato)borate (LiBOB), lithium difluoro(oxalato)borate (LiDFOB), lithium difluorobis(oxalato)phosphate (LiDFBP), lithium bis(trifluoromethanesulfonyl)imide (LiTFSI), lithium bis(fluorosulfonyl)imide (LiFSI), lithium bis(pentafluoroethanesulfonyl)imide (LiBETI), lithium trifluoromethanesulfonate, lithium tetrafluoroethanesulfonate, or a combination thereof.

For example, the lithium salt may be an imide-based lithium salt such as LiTFSI, LiFSI, LiBETI, or a combination thereof. The imide-based lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, one or more selected from N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90:10, 40:60 to 90:10, or 50:50 to 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state rechargeable battery may be improved.

The all-solid-state rechargeable battery may be a unit cell having a structure of a positive electrode/solid electrolyte layer/negative electrode, a bicell having a structure of positive electrode/solid electrolyte layer/negative electrode/solid electrolyte layer/positive electrode, or a stacked battery in which the structure of the unit cell is repeated.

The shape of the all-solid-state rechargeable battery is not particularly limited, and may be, for example, a coin type, a button type, a sheet type, a stack type, a cylindrical shape, a flat type, and the like. In addition, the all-solid-state rechargeable battery may be applied to a large-sized battery used in an electric vehicle or the like. For example, the all-solid-state rechargeable battery may also be used in a hybrid vehicle such as a plug-in hybrid electric vehicle (PHEV). In addition, it may be used in a field requiring a large amount of power storage, and may be used, for example, in an electric bicycle or a power tool. In addition, the all-solid-state rechargeable battery may be used in various fields such as portable electronic devices.

### [Mode for Invention]

Hereinafter, examples of the present invention and comparative examples are described. It is to be understood, however, that the examples are for the purpose of illustration and are not to be construed as limiting the present invention.

### Example 1 (0.25mol%, 460°C)

### 1. Preparation of Positive Electrode Active Material

A composite oxide was prepared by mixing large particles in the form of secondary particles having a composition of LiNi_{0.945}Co_{0.04}Al_{0.015}O₂ and an average particle diameter (D₅₀) of about 14 µm and small particles in the form of secondary particles having a composition of LiNi_{0.94}Co_{0.04}Mn_{0.02}O₂ and an average particle diameter (D₅₀) of about 3.5 µm in a weight ratio of 8:2. 100 parts by mole of the composite oxide, 0.25 parts by mole of zirconium oxide (ZrO₂), and 0.5 parts by mole of anhydrous lithium hydroxide (LiOH) were mixed with a Henschel mixer to proceed with coating. Herein, the mixer was operated at low, medium, and high speeds to ensure uniform coating without layer separation. Subsequently, a heat treatment was performed at 460 °C for 15 hours under an oxygen atmosphere to prepare a final positive electrode active material on which a coating layer was formed.

### 2. Manufacturing of Positive Electrode

84.9 wt% of the positive electrode active material, 13.61 wt% of Li₆PS₅Cl of an argyrodite solid electrolyte, 1 wt% of a PVdF binder, 0.35 wt% of a carbon nanotube conductive material, and 0.14 wt% of a hydrogenated nitrile butadiene rubber (HNBR) as a dispersant were mixed in an isobutyryl isobutyrate (IBIB) solvent, preparing a positive electrode composition. This composition was coated on a positive electrode current collector and then, dried and compressed (with a warm isostatic press (WIP), 500 Mpa for 85 °C, 30 min), obtaining a positive electrode.

### 3. Manufacturing of All-solid-state Rechargeable Battery Cell

After mixing carbon black with a primary particle diameter of about 30 nm and silver (Ag) with an average particle diameter (D₅₀) of about 60 nm in a weight ratio of 3:1 to prepare an Ag/C composite, 0.25 g of the composite was added to 2 g of an NMP solution including 7 wt% of a polyvinylidene fluoride binder and then, mixed, preparing a negative electrode coating layer composition. This composition was coated on a negative electrode current collector and dried, preparing a precipitation-type negative electrode having a negative electrode coating layer on the current collector.

An argyrodite-type solid electrolyte of Li₆PS₅Cl was added to an IBIB solvent in which an acrylic binder was included, preparing a composition for a solid electrolyte layer. The composition was cast on a releasing film and then, dried at room temperature, forming a solid electrolyte layer.

After cutting the prepared positive electrode, negative electrode, and solid electrolyte layer, the solid electrolyte layer was stacked on the positive electrode, and the negative electrode was stacked thereon. The stacked product was sealed into a pouch shape and then, pressed (warm isostatic press (WIP)) at a high temperature of 80 °C to 500 MPa for 30 minutes, manufacturing an all-solid-state rechargeable battery cell.

### Example 2 (0.125 mol%, 500 °C)

A positive electrode active material and an all-solid-state rechargeable battery cell were manufactured substantially in the same manner as in Example 1 except that 0.125 parts by mole of zirconium oxide as a coating agent and 0.25 parts by mole of anhydrous lithium hydroxide (LiOH) were mixed, and the coating heat treatment temperature was changed to 500 °C in the positive electrode active material manufacturing process.

### Example 3 (0.25 mol%, 500 °C)

A positive electrode active material and an all-solid-state rechargeable battery cell were manufactured substantially in the same manner as in Example 1 except that the coating heat treatment temperature was changed to 500 °C in the positive electrode active material manufacturing process.

### Example 4 (0.375 mol%, 500 °C)

A positive electrode active material and an all-solid-state rechargeable battery cell were manufactured substantially in the same manner as in Example 1 except that 0.375 parts by mole of zirconium oxide and 0.75 parts by mole of anhydrous lithium hydroxide (LiOH) were mixed, and the coating heat treatment temperature was changed to 500 °C in the positive electrode active material manufacturing process.

### Example 5 (0.25 mol%, 540 °C)

A positive electrode active material and an all-solid-state rechargeable battery cell were manufactured substantially in the same manner as in Example 1 except that the coating heat treatment temperature was changed to 540 °C in the positive electrode active material manufacturing process.

### Comparative Example 1 (0.25 mol%, 300 °C)

A positive electrode active material and an all-solid-state rechargeable battery cell were manufactured substantially in the same manner as in Example 1 except that the coating heat treatment temperature was changed to 300 °C in the positive electrode active material manufacturing process.

### Comparative Example 2 (0.25 mol%, 400°C)

A positive electrode active material and an all-solid-state rechargeable battery cell were manufactured substantially in the same manner as in Example 1 except that the coating heat treatment temperature was changed to 400 °C in the positive electrode active material manufacturing process.

### Comparative Example 3 (0.05 mol%, 500 °C)

A positive electrode active material and an all-solid-state rechargeable battery cell were manufactured substantially in the same manner as in Example 2 except that 0.05 parts by mole of zirconium oxide and 0.10 parts by mole of anhydrous lithium hydroxide (LiOH) were mixed in the positive electrode active material manufacturing process.

### Comparative Example 4 (0.75 mol%, 500 °C)

A positive electrode active material and an all-solid-state rechargeable battery cell were manufactured substantially in the same manner as in Example 2 except that 0.75 parts by mole of zirconium oxide and 1.5 parts by mole of anhydrous lithium hydroxide (LiOH) were mixed in the positive electrode active material manufacturing process.

### Comparative Example 5 (0.25 mol%, 600 °C)

A positive electrode active material and an all-solid-state rechargeable battery cell were manufactured substantially in the same manner as in Example 1 except that the coating heat treatment temperature was changed to 600 °C in the positive electrode active material manufacturing process.

### Comparative Example 6 (0.25 mol%, 700 °C)

A positive electrode active material and an all-solid-state rechargeable battery cell were manufactured substantially in the same manner as in Example 1 except that the coating heat treatment temperature was changed to 700 °C in the positive electrode active material manufacturing process.

### Comparative Example 7 (without coating layer)

A positive electrode active material and an all-solid-state rechargeable battery cell were manufactured substantially in the same manner as in Example 1 except that the composite oxide prepared in Example 1 itself was used as the positive electrode active material without forming the coating layer on the positive electrode active material.

### Comparative Example 8 (wet coating, 0.25 mol%, 300 °C)

The coating of the composite oxide prepared in Example 1 was performed in a wet coating method. After mixing 2-propanol from which moisture was removed, a methanol solution containing 10% lithium methoxide, and zirconium isopropoxide in a molecular ratio (molar ratio) of 200:2:1, the composite oxide was dispersed therein. To prevent agglomeration of the composite oxide particles, the solvent was evaporated under vacuum at 50 °C, while irradiating with ultrasonic waves. The resulting material was filtered and heat-treated at 300 °C for 1 hour under an air atmosphere to obtain a positive electrode active material coated with about 0.25 wt% of a buffer layer containing Li₂CO₃, LiOH, and ZrO₂.

Except for using the obtained positive electrode active material, an all-solid-state rechargeable battery cell was manufactured substantially in the same manner as in Example 1.

To facilitate understanding, the design details of the positive electrode active materials of Examples 1 to 5 and Comparative Examples 1 to 8 are briefly shown in Table 1 below.

**(Table 1)**

| | Coating method | Coating amount (mol%) | Coating heat treatment temperature |
|---|---|---|---|
| Example1 | | 0.25 | 460 °C |
| Example2 | | 0.125 | 500 °C |
| Example3 | | 0.25 | |
| Example4 | | 0.375 | |
| Example5 | Dry coating | 0.25 | 540 °C |
| Comparative Example1 | | | 300 °C |
| Comparative Example2 | | | 400 °C |
| Comparative Example3 | | 0.05 | 500 °C |
| Comparative Example4 | | 0.75 | |
| Comparative Example5 | | 0.25 | 600 °C |
| Comparative Example6 | | | 700 °C |
| Comparative Example7 | No coating | - | - |
| Comparative Example8 | Wet coating | 0.25 | 300 °C |

### Evaluation Example 1: Evaluation of Initial Charge/discharge Capacity of All-solid-state Rechargeable Battery Cell

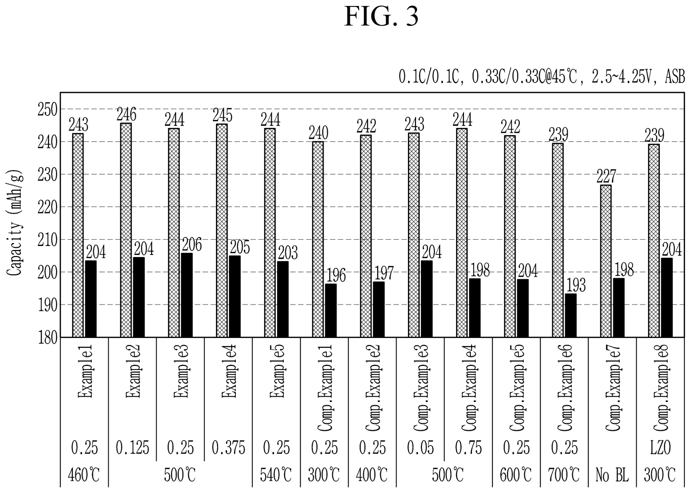

The all-solid-state rechargeable battery cells of Examples 1 to 5 and Comparative Examples 1 to 8 were charged to an upper limit voltage of 4.25 V at a constant current of 0.1 C and at the constant voltage to 0.05 C and then, discharged at the 0.1 to a cut-off voltage of 2.5 V C at 45 °C for initial charge and discharge. In Table 2 below, initial charge capacity, initial discharge capacity, and a ratio of the latter to the former as efficiency are shown. In addition, FIG. 3 shows initial charge capacity (gray bar graph) and initial discharge capacity (black bar graph) of Examples 1 to 5 and Comparative Examples 1 to 8.

**(Table 2)**

| | Charge capacity (mAh/g) | Discharge capacity (mAh/g) | Efficiency (%) |
|---|---|---|---|
| Example 1 | 242.6 | 203.7 | 84.0% |
| Example 2 | 246.0 | 204.4 | 83.1% |
| Example 3 | 244.2 | 205.9 | 84.3% |
| Example 4 | 245.4 | 204.9 | 83.5% |
| Example 5 | 244.3 | 203.2 | 83.2% |
| Comparative Example 1 | 239.9 | 196.5 | 81.9% |
| Comparative Example 2 | 242.1 | 197.0 | 81.4% |
| Comparative Example 3 | 242.6 | 203.7 | 84.0% |
| Comparative Example 4 | 243.8 | 198.0 | 81.2% |
| Comparative Example 5 | 241.8 | 197.7 | 81.8% |
| Comparative Example 6 | 239.5 | 193.4 | 80.8% |
| Comparative Example 7 | 226.7 | 198.0 | 87.3% |
| Comparative Example 8 | 239.2 | 204.2 | 85.4% |

Referring to Table 2 and FIG. 3, compared to Comparative Example 8 using a conventional art, in which an expensive metal alkoxide raw material in an organic solvent was used to form a buffer layer was formed in a wet coating method, Examples 1 to 5, to which a dry coating, a mass-producible method, was applied, secured equivalent or larger capacity.

Comparative Examples 1 and 2, whose coating layers failed did not form an appropriate crystal phase due to a lower coating heat treatment temperature than that of the examples but acted only as resistance, exhibited low initial charge/discharge capacity.

Comparative Example 3 used zirconium oxide, a coating agent, in a smaller amount than that of the examples, wherein a thin coating layer was formed, but a residual lithium layer became thicker due to hydroxide lithium additionally added during the coating process and acted as a buffer layer at the initial charging, and exhibited somewhat higher charge/discharge capacity than Comparative Example 7 in which the coating was not performed.

Comparative Example 4 used zirconium oxide, a coating agent, in a larger amount than the examples, wherein the coating layer became too thick and acted as a resistive layer, and exhibited reduced initial charge/discharge capacity.

Comparative Examples 5 and 6, in which the coating heat treatment temperature was higher than the examples, confirmed that too high a temperature for forming a crystal phase after the coating agglomerated the coating materials, resultantly reducing the coating effect, or made the coating materials absorbed into the positive electrode active materials, ultimately reducing initial charge/discharge capacity.

Comparative Example 8, in which the wet coating was performed, exhibited similar initial discharge capacity to the examples but lower initial charge capacity. This is understood to be because the coating layer acted only as a resistive layer not as a lithium ion transport layer.

### Evaluation Example 2: Evaluation of Cycle-life Characteristics of All-Solid-State Rechargeable Battery Cell

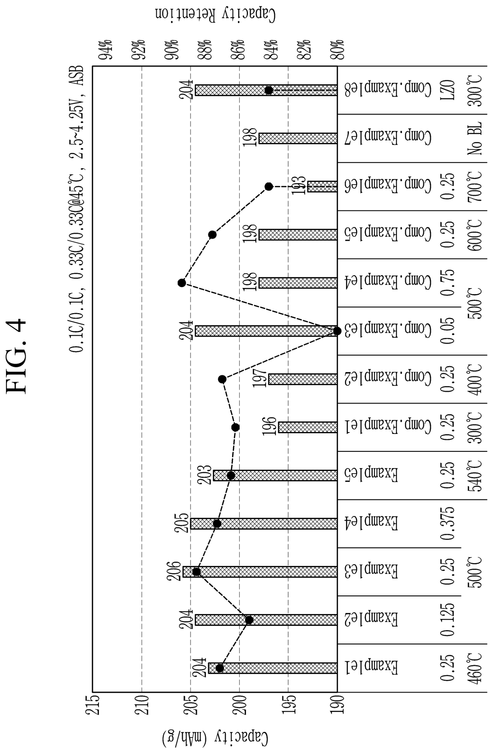

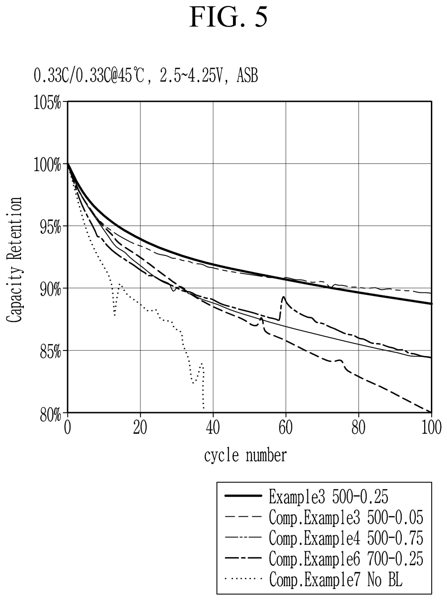

The all-solid-state rechargeable battery cells of Examples 1 to 5 and Comparative Examples 1 to 8 were 100 times repeatedly charged and discharged at 0.33 C within a voltage range of 2.5 V to 4.25 V at 45 °C after performing the same initial charge and discharge as in Evaluation Example 1 to calculate a ratio of 100^{th} discharge capacity to 1^{st} discharge capacity, that is, to evaluate a capacity retention rate during the cycle-life, and the results are shown in Table 3, and FIG. 4 shows the initial discharge capacity (black bar graph) and the 100^{th} capacity retention rate (dotted line graph). In addition, FIG. 5 shows a capacity retention rate according to the number of cycles of Example 3 and Comparative Examples 3, 4, 6, and 7.

**(Table 3)**

| | Initial discharge capacity (mAh/g) | 100^{th} capacity retention rate (%) |
|---|---|---|
| Example 1 | 204 | 87% |
| Example 2 | 204 | 86% |
| Example 3 | 206 | 89% |
| Example 4 | 205 | 87% |
| Example 5 | 203 | 86% |
| Comparative Example 1 | 196 | 86% |
| Comparative Example 2 | 197 | 87% |
| Comparative Example 3 | 204 | 80% |
| Comparative Example 4 | 198 | 90% |
| Comparative Example 5 | 198 | 88% |
| Comparative Example 6 | 193 | 84% |
| Comparative Example 7 | 198 | 0% |
| Comparative Example 8 | 204 | 84% |

Referring to Table 3 or FIGS. 4 and 5, Examples 1 to 5 in which the dry coating was performed, compared to Comparative Example 8 in which the wet coating was performed, secured a much more excellent capacity retention rate during the cycle-life.

Comparative Examples 1 and 2, whose coating heat treatment temperature was lower than that of the examples, exhibited an equivalent capacity retention rate during the cycle-life to that of the examples, but as described above, the coating layers had no appropriate crystal phase formation but acted as a resistance layer, resultantly lowering initial discharge capacity.

Comparative Example 3, in which zirconium oxide, a coating agent, was used in a lower amount than the examples, exhibited relatively high initial charge/discharge capacity, as a residual lithium layer became thick due to hydroxide lithium additionally added during the coating process and acted as a buffer layer at the beginning, but as shown in FIG. 5, the buffer layer was decomposed during the cycle-life and exhibited no sufficient effect, ultimately lowering a capacity retention rate during the cycle-life.

Comparative Example 4, in which zirconium oxide, a coating agent, was used in a higher amount than the examples, exhibited a high capacity retention rate during the cycle-life but as the coating layer became too thick and acted as a resistive layer, lowered initial charge/discharge capacity.

Comparative Examples 5 and 6 exhibited that when the heat treatment temperature was increased to form a crystal phase after the coating, the coating materials were agglomerated together, reducing the coating effect and lowering initial discharge capacity and a capacity retention rate during the cycle-life.

### Evaluation Example 3: Evaluation of Surface Coating Condition

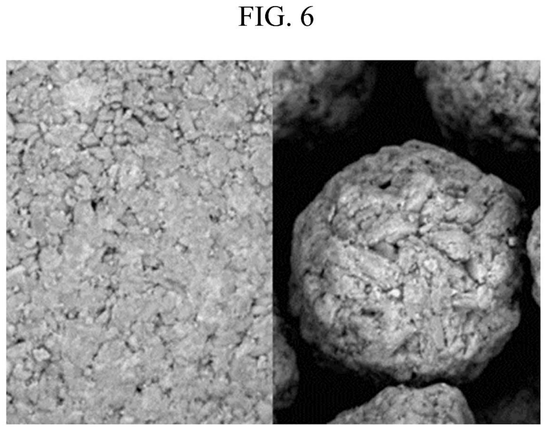

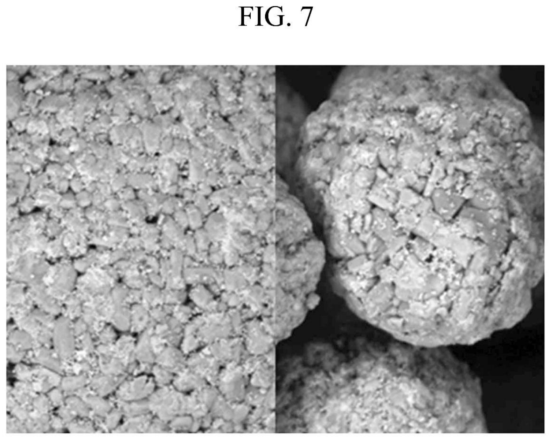

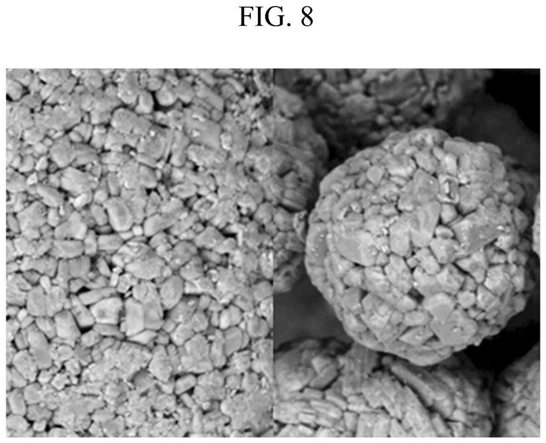

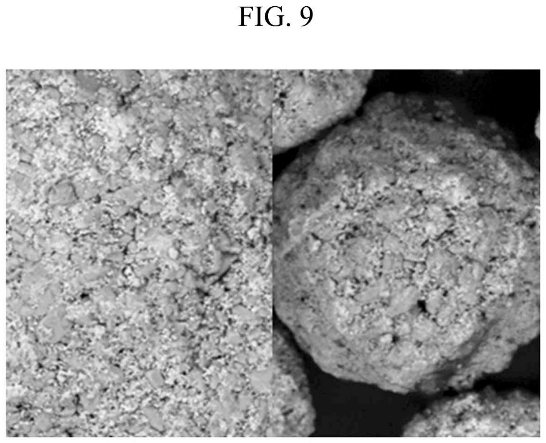

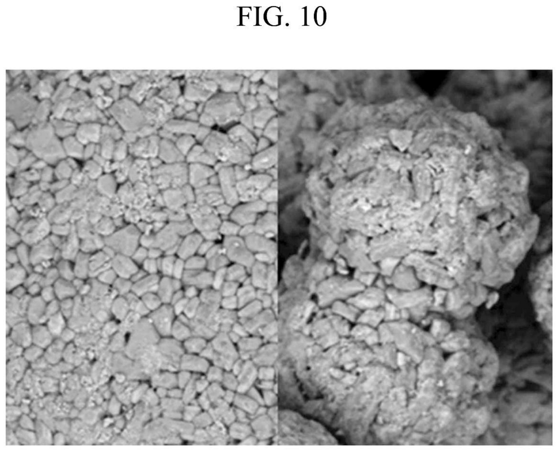

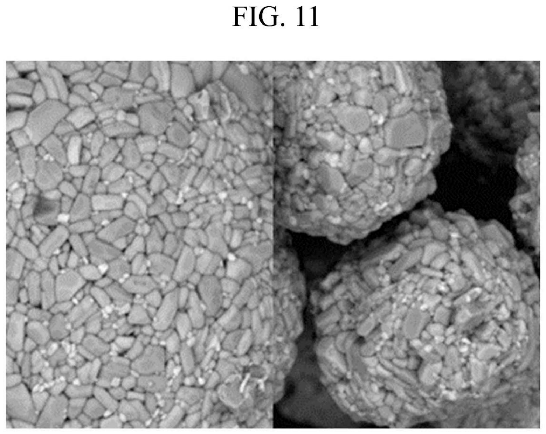

The positive electrode active materials of Example 3 and Comparative Examples 1 and 3 to 6 were taken SEM images of on the surface, and the images at 50,000x magnification (BSE mode) are shown in FIGS. 6 to 11. In each drawing, the left image corresponds to large particles, while the right image corresponds to small particles. FIG. 6 is an SEM image of the surface of the large and small particles of Example 3, and FIG. 7 is an SEM image of the surface of the large and small particles of Comparative Example 1. FIG. 8 is an SEM image of the surface of the large and small particles of Comparative Example 3, and FIG. 9 is an SEM image of the surface of the large and small particles of Comparative Example 4. FIG. 10 is an SEM image of the surface of the large and small particles of Comparative Example 5, and FIG. 11 is an SEM image of the surface of the large and small particles of Comparative Example 6.

Comparing FIGS. 6 to 11, Comparative Example 5 having a coating heat treatment temperature of 600 °C (FIG. 10) and Comparative Example 5 having a coating heat treatment temperature of 700 °C (FIG. 11) exhibited no coating layer on the surface. In addition, Comparative Example 3 having the same coating heat treatment temperature of 500 °C as that of Example 3 but using 0.05 parts by mole zirconium oxide for coating (FIG. 8), a coating layer on the surface was not well observed, but Comparative Example 4 using 0.754 parts by mole of zirconium oxide for coating (FIG. 9) exhibited that the coating material was coated to be thick and partially agglomerated.

In other words, the coating layer on the surface should not be coated to be too thick or thin in order to secure performance of the all-solid-state rechargeable battery cells.

### Evaluation Example 4: Zr Distribution Analysis using SEM-EDS

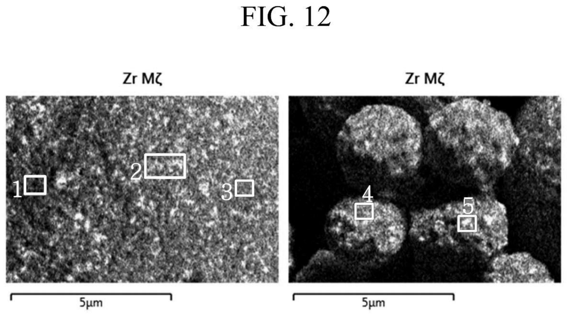

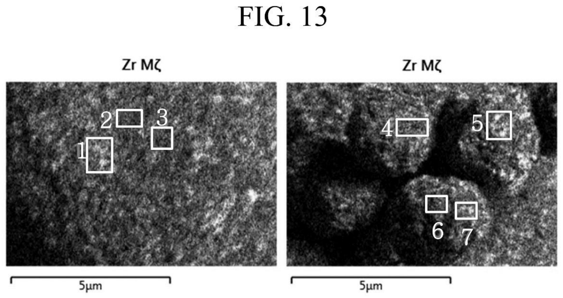

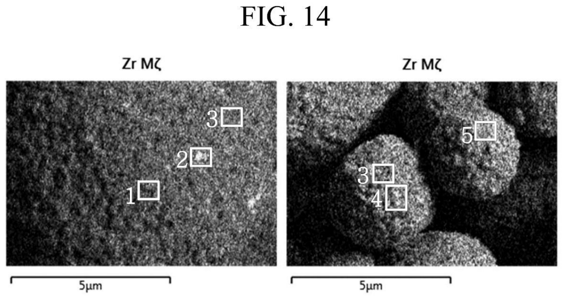

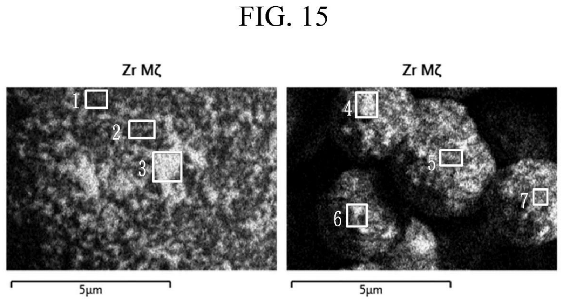

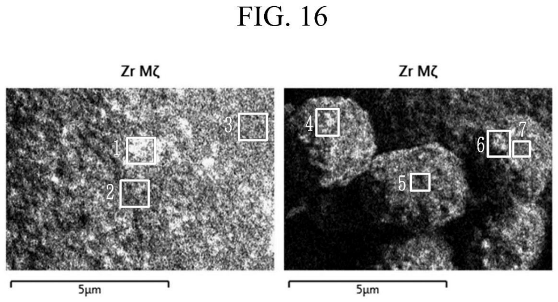

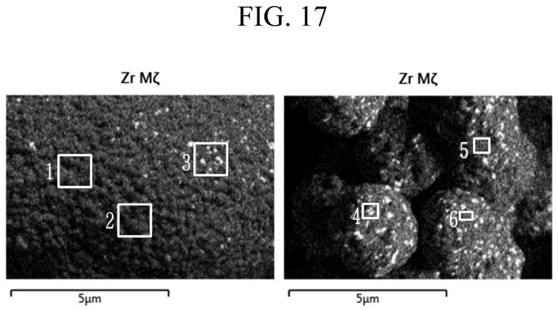

The positive electrode active materials of Example 3 and Comparative Examples 1 and 3 to 6 were taken SEM images of on the surface to check Zr distributions with EDS, and the images are shown in FIGS. 12 to 17. In each drawing, the left image corresponds to large particles, while the right image corresponds to small particles, and Zr was highlighted as yellow. FIG. 12 is a SEM-EDS image of the large and small particles of Example 3, and FIG. 13 is a SEM-EDS image of the large and small particles of Comparative Example 1. FIG. 14 is an SEM-EDS image of the large and small particles of Comparative Example 3, and FIG. 15 is an SEM-EDS image of the large and small particles of Comparative Example 4. FIG. 16 is an SEM-EDS image of the large and small particles of Comparative Example 5, and FIG. 17 is an SEM-EDS image of the large and small particles of Comparative Example 6.

In addition, a Zr content in each area marked by a square box in FIGS. 12 to 17 was analyzed by EDS, and the results are shown in Table 4. In Table 4, a unit was at%.

**(Table 4)**

| Content of Zr | Area 1 | Area 2 | Area 3 | Area 4 | Area 5 | Area 6 | Area 7 |
|---|---|---|---|---|---|---|---|
| Example 3 | 2.9 | 6.0 | 2.4 | 1.6 | 5.9 | - | - |
| Comparative Example 1 | 6.9 | 1.4 | 2.8 | 4.0 | 8.3 | 3.2 | 6.6 |
| Comparative Example 3 | 0.1 | 3.8 | 1.5 | 0 | 3.2 | 0.9 | - |
| Comparative Example 4 | 5.8 | 10.0 | 22.0 | 15.1 | 6.1 | 8.8 | 5.8 |
| Comparative Example 5 | 8.4 | 1.8 | 1.3 | 6.3 | 1.6 | 6.2 | 2.4 |
| Comparative Example 6 | 0.6 | 0.3 | 2.4 | 5.5 | 0.4 | 1.0 | - |

Comparative Example 3 having the same heat treatment temperature of 500 °C as that of Example 3 but using 0.05 parts by mole of zirconium oxide, which was a smaller amount than that of Example 3, exhibited that Zr coating on the surface was nonuniform and less than Example 3, which was confirmed through Table 4 and FIGS. 14 and 12. In addition, Comparative Example 4 using 0.75 parts by mole of zirconium oxide, which was an excessive amount for coating, exhibited that Zr was agglomerated on the surface, as shown in FIG. 15, and Table 4 also shows that the coating was significantly nonuniform. In other words, Comparative Example 3, which had no sufficient coating layer, exhibited low cycle-life characteristics, as shown in FIG. 5, and Comparative Example 4, whose coating layer had too many thickly agglomerated portions, exhibited low initial discharge capacity, as shown in FIG. 4.

Comparing Example 1 and Comparative Examples 1 and 5 to 6, in which zirconium oxide was coated in the same amount of 0.25 parts by mole, but whose heat treatment temperature varied, Comparative Example 1, which had a lower heat treatment temperature of 300 °C, exhibited that lithium zirconium oxide (Li₆Zr₂O₇) was not formed and thus not much brightly detected, as shown in FIG. 13, and in addition, Table 4 shows a large Zr content distribution according to a location.

On the contrary, Comparative Example 5, which equally used 0.25 parts by mole of zirconium oxide for coating but had a higher heat treatment temperature of 600 °C than Example 3, exhibited highly agglomerated Zr, as shown in FIG. 15, and a larger Zr content distribution according to location than that Example 3, which was confirmed through Table 4. In addition, Comparative Example 6, which havd a heat treatment temperature of 700 °C, exhibited a clean surface, as shown in FIG. 11, and a significantly small amount of detected Zr, as shown in FIG. 17 and Table 4. It is understood that the coating material was absorbed into the active material or severely agglomerated during the heat treatment at 700 °C.

### Evaluation Example 5: Analysis of Coating Layer Crystal Phase using STEM-EDS and HRTEM

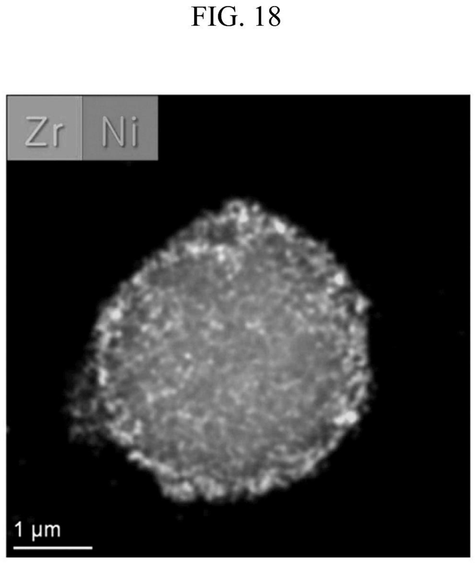

To analyze a crystal phase of the coating layer, the positive electrode active material of Example 4 was subjected to STEM-EDS analysis on the cross-section of the small particles, and the results are shown in FIG. 18. In FIG. 18, Zr was highlighted by light green. Referring to FIG. 18, Zr was very uniformly coated on the surface of the positive electrode active material. The Zr-containing coating layer had a thickness of about 130 nm.

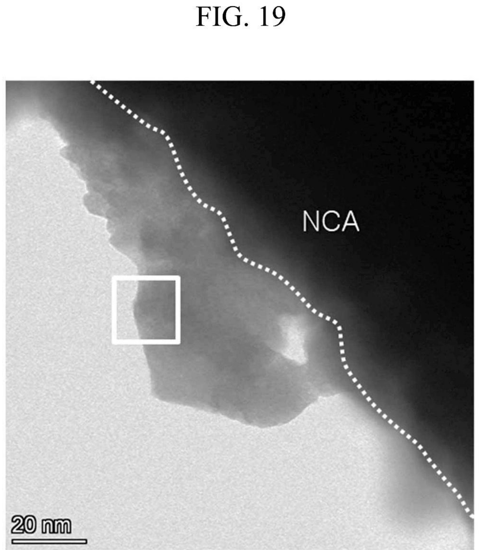

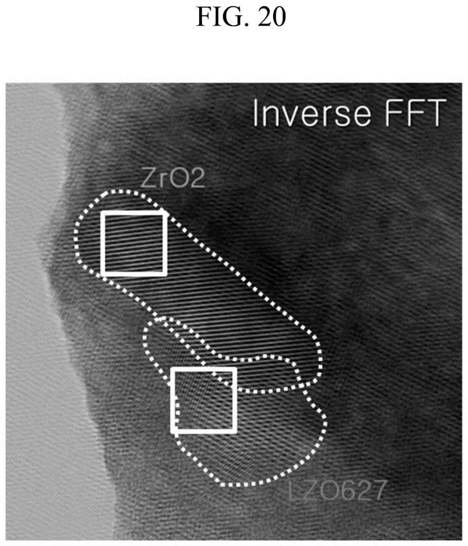

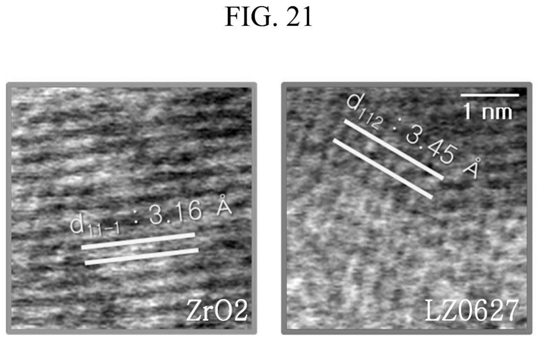

FIG. 19 is a HRTEM image of a cross-section of a small particle among the positive electrode active material of Example 4. The image of FIG. 19 was used to set an area by taking a thickly coated portion from the positive electrode active material surface and marking it by a white square box, and then, the areas was subjected to Inverse Fast Fourier Transform (IFFT), and the result is shown in FIG. 20. In FIG. 20, a ZrO₂ region in FIG. 20 was enlarged and shown at the left side of FIG. 21, and a Li₆Zr₂O₇ region was enlarged and shown at the right side of FIG. 21. As shown in FIGS. 20 and 21, the coating layer was confirmed to have a ZrO₂ crystal phase, a Li₆Zr₂O₇ crystal phase, and a Zr-containing amorphous portion.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### [Description of Symbols]

100: all-solid-state rechargeable battery
200: positive electrode
201: positive electrode current collector
203: positive electrode active material layer
300: solid electrolyte layer
400: negative electrode
401: negative current collector
403: negative electrode active material layer
400': precipitation-type negative electrode
404: lithium metal layer
405: negative electrode coating layer
500: elastic layer

## Claims

1. A positive electrode active material for a rechargeable lithium battery, comprising particles containing a lithium transition metal composite oxide, and a coating layer located on the surface of the particles and containing ZrO₂ and Li₆Zr₂O₇.

2. The positive electrode active material for the rechargeable lithium battery as claimed in claim 1, wherein
the coating layer comprises a ZrO₂ crystal phase, a Li₆Zr₂O₇ crystal phase, and a Zr-containing amorphous region.

3. The positive electrode active material for the rechargeable lithium battery as claimed in claim 1, wherein
the coating layer is in a form of a continuous film or an island.

4. The positive electrode active material for the rechargeable lithium battery as claimed in claim 1, wherein
a thickness of the coating layer is 5 nm to 300 nm.

5. The positive electrode active material for the rechargeable lithium battery as claimed in claim 1, wherein
a content of Zr in the coating layer is 0.1 parts by mole to 0.6 parts by mole based on 100 parts by mole of the particles containing the lithium transition metal composite oxide.

6. The positive electrode active material for the rechargeable lithium battery as claimed in claim 1, wherein
a content of Zr in the coating layer is 0.1 wt% to 6 wt% based on 100 wt% of the positive electrode active material.

7. The positive electrode active material for the rechargeable lithium battery as claimed in claim 1, wherein
the lithium transition metal composite oxide is a lithium nickel-based oxide represented by Chemical Formula 1, a lithium cobalt-based oxide represented by Chemical Formula 2, a lithium iron phosphate-based compound represented by Chemical Formula 3, or a cobalt-free lithium nickel-manganese-based oxide represented by Chemical Formula 4:
[Chemical Formula 1] Liₐ₁Niₓ₁M¹_{y1}M²_{z1}O_{2-b1}X_{b1}
wherein, in Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements selected from consisting of Al, B, Ba, Ca, Ce, Co, Cr, Cu, Fe, Mg, Mn, Mo, Nb, Si, Sn, Sr, Ti, V, W, Zn, and Zr, and X is one or more elements selected from consisting of F, P, and S,
[Chemical Formula 2] Liₐ₂Coₓ₂M³_{y2}O_{2-b2}X_{b2}
wherein, in Chemical Formula 2, 0.9≤a2≤1.8, 0.7≤x2≤1, 0≤y2≤0.3, 0.9≤x2+y2≤1.1, and 0≤b2≤0.1, M³ is one or more elements selected from consisting of Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from consisting of F, P, and S,
[Chemical Formula 3] Liₐ₃Feₓ₃M⁴_{y3}PO_{4-b3}X_{b3}
wherein, in Chemical Formula 3, 0.9≤a3≤1.8, 0.6≤x3≤1, 0≤y3≤0.4, and 0≤b3≤0.1, M⁴ is one or more elements selected from consisting of Al, B, Ba, Ca, Ce, Co, Cr, Cu, Mg, Mn, Mo, Ni, Se, Si, Sn, Sr, Ti, V, W, Y, Zn, and Zr, and X is one or more elements selected from consisting of F, P, and S,
[Chemical Formula 4] Liₐ₄Niₓ₄Mn_{y4}M⁵_{z4}O_{2-b4}X_{b4}
wherein, in Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1, M⁵ is one or more elements selected from consisting of Al, B, Ba, Ca, Ce, Cr, Fe, Mg, Mo, Nb, Si, Sn, Sr, Ti, V, W, and Zr, and X is one or more elements selected from consisting of F, P, and S.

8. The positive electrode active material for the rechargeable lithium battery as claimed in claim 7, wherein
the lithium transition metal composite oxide is the lithium nickel-based oxide represented by Chemical Formula 1, and is a high nickel-based oxide that satisfies 0.8≤x1<1, 0<y1≤0.2, and 0≤z1≤0.2.

9. The positive electrode active material for the rechargeable lithium battery as claimed in claim 7, wherein
the lithium transition metal composite oxide is the lithium nickel-based oxide represented by Chemical Formula 1, and is a high nickel-based oxide that satisfies 0.9≤x1<1, 0<y1≤0.1, and 0≤z1≤0.1.

10. The positive electrode active material for the rechargeable lithium battery as claimed in claim 1, wherein
an average particle diameter of the particles containing the lithium transition metal composite oxide is 1 µm to 25 µm.

11. The positive electrode active material for the rechargeable lithium battery as claimed in claim 1, wherein
the particles containing the lithium transition metal composite oxide comprises large particles having an average particle diameter of 9 µm to 25 µm and small particles having an average particle diameter of 1 µm to 8 µm.

12. The positive electrode active material for the rechargeable lithium battery as claimed in claim 11, wherein
the positive electrode active material comprises 60 to 95 wt% of the large particles and 5 to 40 wt% of the small particles based on 100 wt% of a total sum of the large particles and the small particles.

13. The positive electrode active material for the rechargeable lithium battery as claimed in claim 11, wherein
the large particles are in a form of secondary particles composed of plurality of primary particles, and
the small particles are in a form of a secondary particle composed of a plurality of primary particles or in a form of single particles.

14. A method for preparing a positive electrode active material for a rechargeable lithium battery, comprising
dry mixing 100 parts by mole of particles containing a lithium transition metal composite oxide and 0.1 parts by mole to 0.6 parts by mole of a zirconium raw material and heat treating the mixture at 420 °C to 580 °C.

15. The method for preparing the positive electrode active material for the rechargeable lithium battery as claimed in claim 14, wherein
a lithium raw material is mixed together with the particles containing a lithium transition metal composite oxide and the zirconium raw material in a dry manner.

16. The method for preparing the positive electrode active material for the rechargeable lithium battery as claimed in claim 15, wherein
the lithium raw material is mixed in an amount of greater than 1 part by mole and less than or equal to 4 parts by mole based on 1 part by mole of the zirconium raw material.

17. The method for preparing the positive electrode active material for the rechargeable lithium battery as claimed in claim 14, wherein
wherein the heat treatment is performed in an oxygen atmosphere for 5 to 25 hours.

18. The method for preparing the positive electrode active material for the rechargeable lithium battery as claimed in claim 14, wherein
the zirconium raw material is a particle containing zirconium oxide and the average particle diameter (D50) of the particle is 10 nm to 500 nm.

19. The method for preparing the positive electrode active material for the rechargeable lithium battery as claimed in claim 14, wherein
the lithium transition metal composite oxide is a lithium nickel-based oxide represented by Chemical Formula 1, a lithium cobalt-based oxide represented by Chemical Formula 2, a lithium iron phosphate-based compound represented by Chemical Formula 3, or a cobalt-free lithium nickel-manganese-based oxide represented by Chemical Formula 4:
[Chemical Formula 1] Liₐ₁Niₓ₁M¹_{y1}M²_{z1}O_{2-b1}X_{b1}
wherein, in Chemical Formula 1, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently one or more elements selected from consisting of Al, B, Ba, Ca, Ce, Co, Cr, Cu, Fe, Mg, Mn, Mo, Nb, Si, Sn, Sr, Ti, V, W, Zn, and Zr, and X is one or more elements selected from consisting of F, P, and S,
[Chemical Formula 2] Liₐ₂Coₓ₂M³_{y2}O_{2-b2}X_{b2}
wherein, in Chemical Formula 2, 0.9≤a2≤1.8, 0.7≤x2≤1, 0≤y2≤0.3, 0.9≤x2+y2≤1.1, and 0≤b2≤0.1, M³ is one or more elements selected from consisting of Al, B, Ba, Ca, Ce, Cr, Cu, Fe, Mg, Mn, Mo, Ni, Se, Si, Sn, Sr, Ti, V, W, Y, Zn, and Zr, and X is one or more elements selected from consisting of F, P, and S,
[Chemical Formula 3] Liₐ₃Feₓ₃M⁴_{y3}PO_{4-b3}X_{b3}
wherein, in Chemical Formula 3, 0.9≤a3≤1.8, 0.6≤x3≤1, 0≤y3≤0.4, and 0≤b3≤0.1, M⁴ is one or more elements selected from consisting of Al, B, Ba, Ca, Ce, Co, Cr, Cu, Mg, Mn, Mo, Ni, Se, Si, Sn, Sr, Ti, V, W, Y, Zn, and Zr, and X is one or more elements selected from consisting of F, P, and S,
[Chemical Formula 4] Liₐ₄Niₓ₄Mn_{y4}M⁵_{z4}O_{2-b4}X_{b4}
wherein, in Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1, M⁵ is one or more elements selected from consisting of Al, B, Ba, Ca, Ce, Cr, Fe, Mg, Mo, Nb, Si, Sn, Sr, Ti, V, W, and Zr, and X is one or more elements selected from consisting of F, P, and S.

20. The method for preparing the positive electrode active material for the rechargeable lithium battery as claimed in claim 14, wherein
the lithium transition metal composite oxide is the lithium nickel-based oxide represented by Chemical Formula 1, and is a high nickel-based oxide that satisfies 0.8≤x1<1, 0<y1≤0.2, and 0≤z1≤0.2.

21. The method for preparing the positive electrode active material for the rechargeable lithium battery as claimed in claim 14, wherein
the particles containing the lithium transition metal composite oxide comprises large particles having an average particle diameter of 9 µm to 25 µm and small particles having an average particle diameter of 1 µm to 8 µm.

22. The method for preparing the positive electrode active material for the rechargeable lithium battery as claimed in claim 21, wherein
based on 100 wt% of the total sum of the large particles and the small particles, the large particles are included in an amount of 60 wt% to 95 wt% and the small particles are included in an amount of 5 wt% to 40 wt%.

23. The method for preparing the positive electrode active material for the rechargeable lithium battery as claimed in claim 21, wherein
the large particles are in a form of a secondary particle composed of a plurality of primary particles, and
the small particles are in a form of a secondary particle composed of a plurality of primary particles or a form of single particles.

24. A positive electrode for a rechargeable lithium battery, comprising
the positive electrode active material as claimed in any one of claim 1 to claim 13.

25. The positive electrode for the rechargeable lithium battery as claimed in claim 24, wherein
the positive electrode further comprises a sulfide-based solid electrolyte.

26. The positive electrode for the rechargeable lithium battery as claimed in claim 25, wherein
65 to 99 wt% of the positive electrode active material and 1 to 35 wt% of the sulfide-based solid electrolyte, based on 100 wt% of a total of the positive electrode active material and the sulfide-based solid electrolyte in the positive electrode.

27. The positive electrode for the rechargeable lithium battery as claimed in claim 25, wherein
the sulfide-based solid electrolyte comprises an argyrodite-type sulfide, is in the form of particles, and an average particle diameter (D50) of the particles is 0.1 µm to 3.0 µm.

28. A rechargeable lithium battery, comprising
the positive electrode as claimed in claim 24,
a negative electrode, and
an electrolyte.

29. An all-solid-state rechargeable battery, comprising
the positive electrode as claimed in claim 24,
a negative electrode, and
a solid electrolyte layer between the positive electrode and the negative electrode.

30. The all-solid-state rechargeable battery as claimed in claim 29, wherein
the negative electrode comprises a current collector and a negative electrode coating layer disposed on the current collector and containing a lithiophilic metal, a carbon material, or a combination thereof, and
a lithium metal layer formed by charging between the current collector and the negative electrode coating layer.
